(19) Europäisches Patentamt / European Patent Office / Office européen des brevets

(11) **EP 0 862 827 B1**

(12) **EUROPÄISCHE PATENTSCHRIFT**

(45) Veröffentlichungstag und Bekanntmachung des Hinweises auf die Patenterteilung:
**12.03.2008 Patentblatt 2008/11**

(21) Anmeldenummer: **97944739.8**

(22) Anmeldetag: **19.09.1997**

(51) Int Cl.:
*H04L 29/06* (2006.01)    *H04L 12/26* (2006.01)

(86) Internationale Anmeldenummer:
**PCT/DE1997/002178**

(87) Internationale Veröffentlichungsnummer:
**WO 1998/012852 (26.03.1998 Gazette 1998/12)**

(54) **VERFAHREN ZUM ÜBERPRÜFEN EINES GEMÄSS EINEM KOMMUNIKATIONSPROTOKOLL DURCHGEFÜHRTEN DATENAUSTAUSCHES**

METHOD FOR CHECKING A DATA EXCHANGE BASED ON A COMMUNICATION PROTOCOL

CONTROLE D'UN ECHANGE DE DONNEES EFFECTUE SELON UN PROTOCOLE DE COMMUNICATION

(84) Benannte Vertragsstaaten:
**DE FR GB IT**

(30) Priorität: **20.09.1996 DE 19640346**

(43) Veröffentlichungstag der Anmeldung:
**09.09.1998 Patentblatt 1998/37**

(73) Patentinhaber: **TEKTRONIX, INC.**
**Wilsonville, Oregon 97070-1000 (US)**

(72) Erfinder: **MUSIAL, Marek**
**D-12305 Berlin (DE)**

(74) Vertreter: **Hofstetter, Alfons J. et al**
**Hofstetter, Schurack & Skora**
**Balanstrasse 57**
**81541 München (DE)**

(56) Entgegenhaltungen:
**EP-A- 0 478 175    US-A- 5 659 555**

- **RAMALINGOM T ET AL: "CONTEXT INDEPENDENT UNIQUE SEQUENES GENERATION FOR PROTOCOL TESTING" PROCEEDINGS OF IEEE INFOCOM 1996. CONFERENCE ON COMPUTER COMMUNICATIONS, FIFTEENTH ANNUAL JOINT CONFERENCE OF THE IEEE COMPUTER AND COMMUNICATIONS SOCIETIES. NETWORKING THE NEXT GENERATION SAN FRANCISCO, MAR. 24 - 28, 1996, Bd. 3, 24.März 1996, INSTITUTE OF ELECTRICAL AND ELECTRONICS ENGINEERS, Seiten 1141-1148, XP000622248**
- **CHANSON S T ET AL: "A UNIFIED APPROACH TO PROTOCOL TEST SEQUENCE GENERATION" NETWORKING: FOUNDATION FOR THE FUTURE, SAN FRANCISCO, MAR. 28 - APR. 1, 1993, Bd. 1, 28.März 1993, INSTITUTE OF ELECTRICAL AND ELECTRONICS ENGINEERS, Seiten 106-114, XP000419723**
- **HIRONORI SAITO ET AL: "AN ACYCLIC EXPANSION-BASED PROTOCOL VERIFICATION FOR COMMUNICATIONS SOFTWARE" IEICE TRANSACTIONS ON COMMUNICATIONS, Bd. E75-B, Nr. 10, 1.Oktober 1992, Seiten 998-1007, XP000324947**

EP 0 862 827 B1

**Beschreibung**

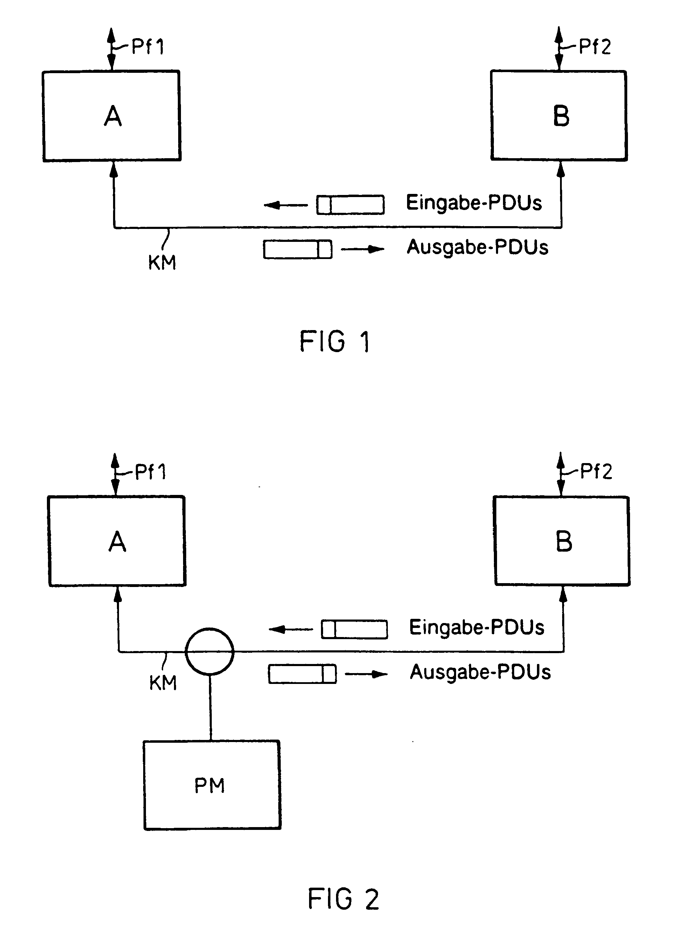

Es ist bekannt, daß Kommunikationspartner gemäß einem Kommunikationsprotokoll untereinander einen Datenaustausch vornehmen. Eine Anordnung zur Durchführung eines Datenaustausches auf diese Weise ist in der Figur 1 dargestellt. Kommunikationspartner A und B kommunizieren miteinander über ein Kommunikationsmedium KM, z. B. eine elektrische Leitung, indem sie gemäß einem Kommunikationsprotokoll Nachrichten oder Protokolldateneinheiten (Protocol Data Units, PDUs) austauschen. Das Kommunikationsprotokoll stellt ein vollständiges Regelwerk für das geforderte Verhalten jedes Kommunikationspartners A und B dar. Die Kommunikationspartner A und B sind Instanzen im Sinne des OSI-Referenzmodells, das im einzelnen in "ISO. Information Processing Systems - Open Systems Interconnection - Basis Reference Model" International Standard ISO/IS 7498,ISO, 1984 beschrieben ist. Das Dokument, IEICE Transactions on Communications, October 1992, pages 998-1007, Hironori Saito et al., "An Acyclic Expansion-Based Protocol Verification for Communications Software", beschreibt eine, mit erweiterten Automaten vorgesehen Protokollüberprüfungsmethode.

Der Erfindung liegt die Aufgabe zugrunde, gemäß dem Kommunikationsprotokoll auftretende Kommunikationszustände des einen oder des anderen Kommunikationspartners in ihrem Zeitablauf zu erfassen und auftretende Verstöße gegen das Kommunikationsprotokoll zu ermitteln.

Zur Lösung dieser Aufgabe wird bei einem Verfahren zum Überprüfen eines zwischen Kommunikationspartnern über ein Kommunikationsmedium gemäß einem Kommunikationsprotokoll durchgeführten Datenaustausches, das nach dem Konzept eines erweiterten endlichen Automaten definiert ist, der Datenaustausch mittels eines mit dem Kommunikationsmedium gekoppelten Protokollmonitors erfaßt, der einen Prüfautomaten enthält, der ebenfalls nach dem Konzept des erweiterten endlichen Automaten definiert ist, wobei der Prüfautomat die gleichen Zustände und Zustandsvariablen wie der das Kommunikationsprotokoll definierende Protokollautomat mit der Abweichung enthält, daß beim Prüfautomaten einem Wert der Zustandsvariablen mehrere Werte aus dem Wertebereich der entsprechenden Zustandsvariablen des Protokollautomaten zugeordnet sind, und ausgehend von einem Zustand des Prüfautomaten, der alle Zustände und alle Werte der Zustandsvariablen des Protokollautomaten umfaßt, werden auf im Kommunikationsmedium beobachtete Transitionen des Protokollautomaten spekulativ Transitionen im Prüfautomaten nachgebildet und durch jeweils logische Ausscheidung der Zustand im Prüfautomaten hergestellt, der dem jeweiligen Zustand des Protokollautomaten entspricht.

Ein wesentlicher Vorteil des erfindungsgemäßen Verfahrens besteht darin, daß mit ihm die Überprüfung des Datenaustausches mit einem beliebigen Beginn vorgenommen werden kann, also ohne Kenntnis des aktuellen Zustandes der Kommunikation, weil der Protokollmonitor in der Lage ist, aus den am Kommunikationsmedium erfaßten Daten auf den Zustand der Kommunikationspartner zu schließen.

Häufig erfolgt der Kommunikationsaustausch zwischen Kommunikationspartnern auf der Basis von Kommunikationsprotokollen, die nach dem Konzept mehrerer zusammenwirkender erweiterter endlicher Automaten definiert sind. Um in einem solchen Falle mit vertretbarem Rechenaufwand bzw. in angemessener Zeit Einblick in den Kommunikationszustand zu gewinnen, enthält bei einer Anwendung des erfindungsgemäßen Verfahrens bei einem zwischen Kommunikationspartnern gemäß einem Kommunikationsprotokoll durchgeführten Datenaustausch, das nach dem Konzept mehrerer zusammenwirkender erweiterter endlicher Automaten definiert ist, der Protokollmonitor Prüfautomaten in einer der Anzahl der das Kommunikationsprotokoll definierenden erweiterten endlichen Automaten, und jeder Prüfautomat ist durch Zustände und Zustandsvariablen entsprechend dem jeweils zugeordneten Automaten des Kommunikationsprotokolls definiert.

Zur weiteren Erläuterung der Erfindung ist in

Figur 2 ein Blockschaltbild einer Anordnung zur Durchführung des erfindungsgemäßen Verfahrens, in

Figur 3 ein Zustandsgraph eines beispielsweisen Protokollautomaten, in

Figur 4 ein korrekter Protokollablauf mit dem beispielsweisen Protokollautomaten und in

Figur 5 das Ergebnis der Überprüfung des Datenaustausches gemäß dem beispielsweisen Protokollautomaten dargestellt.

Wie die Fig. 2 erkennen läßt, in der mit der Fig. 1 übereinstimmende Teile mit den gleichen Bezugszeichen versehen sind, ist mit dem Kommunikationsmedium M ein Protokollmonitor PM so gekoppelt, daß er die über das Kommunikationsmedium KM ausgetauschten Daten zwischen den Kommunikationspartnern A und B erfassen kann. Dabei liest der Protokollmonitor PM alle ausgetauschten Nachrichten mit, ohne sie zu verändern oder in sonstiger Weise auf die Kommunikation zwischen A und B Einfluß zu nehmen. Der Protokollmonitor PM erhält keinerlei weitere Informationen; er hat insbesondere keinen Zugriff auf die mit den Benutzern der Kommunikationspartner A oder B ausgetauschten Dienstprimitiven, die in Figur 2 durch Pfeile Pf1 und Pf2 schematisch gekennzeichnet sind. Näheres zu den Dienstprimitiven ist ebenfalls der obengenannten Veröffentlichung zu entnehmen.

Bevor das erfindungsgemäße Verfahren weiter beschrieben wird, erscheint es zweckmäßig, einige Vorbemerkungen zu machen:

Zur Ermittlung sowohl von Kommunikationszuständen als auch von Protokollverstößen ist eine Beschreibung des zugrundeliegenden Protokolls notwendig, die im Protokollmonitor PM eingebaut ist. Das geeignete und übliche Konzept zur Definition von Kommunikationsprotokollen ist der erweiterte endliche Automat (extended finite state machine, EFSM), wie er z.B. im Buch von D. Hogrefe "Estelle, LOTOS und SDL: Standard-Spezifikationssprachen für verteilte Systeme", Springer Compass. Springer-Verlag , Berlin, Heidelberg, New York etc, 1989 beschrieben ist. Er stellt eine Verallgemeinerung des z. B. in "Proceedings of the 1994 International Symposium on Software Testing and Analysis (ISSTA), ACM SIGSOFT Software Engineering Notes, Special issue, Seiten 109 bis 124, August 1994 erklärten endlichen Automaten (finite state machine, FSM) dar.

In üblichen Protokollstandards erfolgt die Beschreibung eines Kommunikationsprotokolls - auf unterschiedlichem Niveau der Formalität - stets anhand dieses Automatenkonzepts. Daher basiert die in den Protokollmonitor PM eingebaute Protokolldefinition ebenfalls auf einem erweiterten endlichen Automaten.

Im folgenden ist mit M ein Protokollautomat bezeichnet, der den erweiterten endlichen Automaten darstellt, durch den die Regeln für das am Kommunikationsmedium KM beobachtbare Verhalten des Kommunikationspartners A vorgegeben sind.

Wie ein gewöhnlicher erweiterter endlicher Automat umfaßt auch der Protokollautomat M eine Anzahl von Zuständen und Zustandsvariablen, wobei zu jedem Zeitpunkt jede Variable einen bestimmten Wert aus ihrem Wertebereich innehat. Anhand eines solchen Protokollautomaten M ist das zu überwachende Kommunikationsprotokoll definiert. Gemäß der Erfindung wird mittels des Protokollmonitors PM ein Prüfautomat F eingesetzt, der die gleichen Zustände und Zustandsvariablen wie der Protokollautomat M umfaßt. Jeder Zustandsvariablen im Prüfautomaten F kann aber zu jedem Zeitpunkt eine ganze Auswahl von Werten aus dem Wertebereich der korrespondierenden Zustandsvariablen im Protokollautomaten M zugewiesen werden. Mathematisch formuliert bildet der Prüfautomat F einen erweiterten endlichen Automaten mit gleichnamigen Zustandsvariablen wie der Protokollautomat M, deren Wertebereiche aber gerade die Potenzmengen der entsprechenden Wertebereiche aus dem Protokollautomaten M sind.

Angenommen, im Protokollautomaten M gibt es eine Zustandsvariable "Farbe" , die die Werte "schwarz" und "weiß" annehmen kann. Die korrespondierende Zustandsvariable "Farbe"des Prüfautomaten F kann dann jede Teilmenge dieses Wertebereichs symbolisieren, ihre vier möglichen Belegungen sind also { }, {weiß}, {schwarz} und {schwarz, weiß}.

Jede Belegung der Zustandsvariablen des Prüfautomaten F repräsentiert eine Vielzahl in Betracht zu ziehender Zustände für den Protokollautomaten M. Ein Zustand des Prüfautomaten F läßt sich also als eine unscharfe Zustandsbeschreibung für den Protokollautomaten M auffassen. Die letzte der vier Möglichkeiten im Beispiel sagt etwa aus, daß über die Belegung der Zustandsvariablen "Farbe" des Protokollautomaten M nichts bekannt ist. Wenn alle Zustandsvariablen des Prüfautomaten F derart mit dem gesamten Wertebereich der zugehörigen Zustandsvariablen des Protokollautomaten M belegt sind, bedeutet dies, daß der gesamte Zustand des Protokollautomaten M völlig unbekannt ist. Dies ist die typische Situation zum Zeitpunkt des Prüfungsbeginns der Kommunikationsverbindung.

Die bei der Durchführung des erfindungsgemäßen Verfahrens zu verwendenden Zustandsübergänge des Prüfautomaten F, im folgenden Transitionen genannt, ergeben sich unmittelbar aus den Transitionen des Protokollautomaten M. Da in der Fachliteratur bisher keine einheitliche Definition für erweiterte endliche Automaten existiert, erscheint es zum Verständnis der weiteren Ausführungen angebracht, die Arten und Bestandteilen von Transitionen zu definieren, wie sie nachstehend benutzt werden.

Eine Transition soll aus folgenden Angaben bestehen:

- Zustandsbedingung.
  Diese ist eine logische Funktion, die in Abhängigkeit vom Grundzustand und den Werten der Zustandsvariablen des Protokollautomaten M festlegt, ob die Transition in einem gegebenen Zustand schalten kann. Für den Spezialfall eines - nicht erweiterten - endlichen Automaten legt die Zustandsbedingung gerade den Ausgangszustand einer Transition fest.

- Spezifikation der Eingabenachricht.
  Das Schalten einer Transition wird u.U. durch das Eintreffen einer Nachricht vom überwachten Kommunikationspartner ausgelöst. Der Typ dieser Nachricht sowie die erwarteten Werte von Parametern, die in diese Nachricht hineinkodiert sein können, bestimmen das Eingabeverhalten der Transition. Die Festlegung der erwarteten Nachrichtenparameter kann in Abhängigkeit von den Zustandsvariablen des Protokollautomaten M erfolgen. Eine Transition kann aus einem gegebenen Zustand genau dann schalten, wenn dieser Zustand die Zustandsbedingung erfüllt und eine Nachricht eintrifft, die mit der Spezifikation der Eingabenachricht der Transition konform ist. Wenn keine Eingabenachricht zur Transition angegeben ist, entfällt die zweite Hälfte der Bedingung.

- Spezifikation der Ausgabenachricht.
  Beim Schalten einer Transition wird u.U. eine Ausgabenachricht erzeugt. Der Typ dieser Nachricht sowie die zulässigen Werte von Nachrichtenparametern bestimmen das Ausgabeverhalten der Transition. Die Festlegung der zulässigen Nachrichtenparameter kann in Abhängigkeit von den Zustandsvariablen des Protokollautomaten M erfolgen. Wenn keine Ausgabenachricht zur Transition angegeben ist, wird beim Schalten der Transition keine Ausgabe erzeugt.
- Zustandstransformation.
  Dies ist eine Funktion, die aus einem Zustand des Protokollautomaten M und eventuellen Nachrichtenparametern der Ein- und Ausgabenachrichten die Folgebelegung aller Zustandsvariablen nach dem Schalten der Transition ermittelt. Für den Spezialfall eines - nicht erweiterten - endlichen Automaten gibt die Zustandstransformation gerade den Zielzustand der Transition an.
- Priorität.
  Eine numerische Konstante, die zur Auswahl der schaltenden Transition im Falle mehrerer schaltfähiger Transitionen herangezogen wird. Falls Transitionen T1 und T2 gemäß den oben erläuterten Bedingungen schaltfähig sind, schließt Transition T1 die konkurrierende T2 vom nächsten Zustandsübergang aus, wenn und nur wenn folgende beiden Bedingungen erfüllt sind:

> T1 hat eine höhere Priorität als T2.
> T1 erwartet keine Eingabenachricht, oder T2 erwartet eine Eingabenachricht.

Die zweite Bedingung verhindert, daß Eingabetransitionen Transitionen ohne Eingabe ausschließen. Damit wird modelliert, daß ein Protokollautomat "im Einsatz" andere Aktionen ausführen kann, bevor die nächste Eingabenachricht tatsächlich eintrifft.

Wenn trotz dieser Prioritätsregel mehrere schaltfähige Transitionen übrigbleiben, erfolgt die Auswahl zwischen ihnen nichtdeterministisch.

Bei der Durchführung des erfindungsgemäßen Verfahrens verfolgt der Protokollmonitor PM den internen Zustand der beobachteten Instanz bzw beispielsweise des Kommunikationspartners A, und zwar mit Hilfe unscharfer Zustandsbeschreibungen seitens des Prüfautomaten F, wie sie oben erläutert worden sind. Bei Prüfungsbeginn wird in der geschilderten Art und Weise vom Prüfautomaten F im Protokollmonitor PM ein vollständig unbekannter Zustand des Protokollautomaten M beim Kommunikationspartner A dargestellt.

Der Protokollmonitor PM wendet nun die für den Protokollautomaten M definierten Transitionen auf seinen Prüfautomaten F an. Gegenüber dem oben definierten Begriff der Schaltfähigkeit für die Transitionen im Protokollautomaten M ergeben sich zwei Änderungen:

1. Die Ausgaben des beispielsweise überwachten Protokollautomaten A sind aus der Beobachtung bekannt. Zur Frage der Schaltfähigkeit kommt daher noch der Aspekt der Schaltkonsistenz: Eine in einem Zustand des Protokollautomaten M schaltfähige Transition ist konsistent schaltfähig, wenn und nur wenn eine ggf. zu ihr gehörende Ausgabespezifikation mit der nächsten anstehenden Ausgabenachricht in der beobachteten Kommunikation verträglich ist.

2. Da jeder Zustand des Prüfautomaten F im allgemeinen eine Anzahl von Zuständen des Protokollautomaten M repräsentiert, läßt sich die Frage nach der Schaltkonsistenz einer Transition für einen Zustand des Prüfautomaten F nicht mehr stets eindeutig mit "ja" oder "nein" beantworten.

Wenn eine Transition T für mindestens eine der von einem Zustand des Prüfautomaten F repräsentierten Belegungen der Zustandsvariablen des Protokollautomaten M konsistent schaltfähig ist, so ist das Schalten der Transition T eine potentiell korrekte tatsächliche Verhaltensweise des Kommunikationspartners A zu diesem Zeitpunkt. Der Protokollmonitor PM führt die Transition T in diesem Falle spekulativ aus. Dazu wird der Zustand des Prüfautomaten F zunächst so eingeschränkt, daß er die kleinstmögliche Obermenge aller Zustände des Protokollautomaten M repräsentiert, für die die Transition T konsistent schaltfähig ist. Denn wenn die Transition T protokollkorrekt schaltet, dann höchstens aus einem Zustand dieser kleineren Zustandsmenge des Protokollautomaten M. Anschlie-ßend wird die Zustandstransformation der Transition T auf den reduzierten Zustand des Prüfautomaten F angewandt. Wenn dabei Konstante oder beobachtete Nachrichtenparameter in Zuweisungen an Zustandsvariable vorkommen, ergibt sich u.U. eine weitere Einschränkung des Zustands des Prüfautomaten F im Hinblick auf die Anzahl der repräsentierten Zustände des Protokollautomaten M.

Daß hier von der kleinstmöglichen Obermenge die Rede ist und nicht von der exakten Menge der Zustände des Protokollautomaten M mit Schaltkonsistenz der Transition T, liegt daran, daß die Zustandsvariablen im Prüfautomaten F unabhängig voneinander Teilmengen der Wertebereiche der einzelnen Zustandsvariablen des Protokollautomaten M angeben. Damit sind nicht alle Teilmengen des Zustandsraums des Protokollautomaten M repräsentierbar.

Da die Ausführung einer Transition nur spekulativ erfolgen kann, muß der Protokollmonitor PM, von einem Zustand des Prüfautomaten F ausgehend, alle für mindestens einen Zustand des Protokollautomaten M konsistent schaltfähigen Transitionen so behandeln. Jede spekulative Transitionsausführung resultiert in einem eigenen neuen Zustand des Prüfautomaten F, der jedoch im allgemeinen stärker eingeschränkt ist als der Ausgangszustand.

Damit die Anzahl der zu berücksichtigen Zustände des Prüfautomaten F nicht unbegrenzt zunimmt, sind noch folgende Regeln zu befolgen:

- Wenn ein neu erzeugter Zustand des Prüfautomaten F eine (echte oder unechte) Teilmenge durch einen anderen Zustand des Prüfautomaten F erfaßten Zustände des Protokollautomaten M repräsentiert und bisher dieselben Nachrichten verarbeitet hat wie dieser, so wird der neu erzeugte Zustand des Prüfautomaten F verworfen.

- Wenn ein neu erzeugter Zustand des Prüfautomaten F eine echte Obermenge der durch einen anderen Zustand des Prüfautomaten F erfaßten Zustände des Protokollautomaten M repräsentiert und bisher dieselben Nachrichten verarbeitet hat wie dieser, so wird der andere Zustand des Prüfautomaten F verworfen.

Das beschriebene Verfahren konvergiert anhand der beobachteten Nachrichten mittels spekulativer Transitionsausführungen und fortgesetzter Einschränkung unscharfer Zustandsbeschreibungen zu einer scharfen Zustandsbeschreibung, nämlich einem Zustand des Prüfautomaten F, der nur noch einen einzelnen Zustand des Protollautomaten M repräsentiert. Damit ist die Erfassung des Kommunikationszustandes im wesentlichen abgeschlossen.

Eine Erkennung von Fehlern bzw. von Verstößen gegen das Kommunikationsprotokoll ergibt sich dabei als Nebenprodukt: Sobald von keinem Zustand des Prüfautomaten F aus mehr irgendeine Transition in Übereinstimmung mit dem beobachteten Nachrichtenstrom schalten kann; liegt ein Protokollverstoß seitens des Kommunikationspartners A vor. Denn der Protokollmonitor PM hat alle protokollkonformen Verhaltensweisen des Kommunikationspartners A bis zu diesem Zeitpunkt in Betracht gezogen, das jetzige Verhalten läßt sich aber in keiner Weise mehr mit den Regeln des Protokolls erklären.

Die Reduktion bis zur kleinsten darstellbaren Obermenge der schaltfähigen Zustände gemäß den obigen Ausführungen garantiert, daß niemals ein potentiell für ein korrektes Folgeverhalten verantwortlicher Zustand des Protokollautomaten M unberücksichtigt bleibt. Damit ist - trotz der unvollständigen Repräsentierbarkeit - sichergestellt, daß alle vom Protokollmonitor PM erkannten Fehler stets tatsächlichen Protokollverstößen seitens des Kommunikationspartners A entsprechen.

Die unvollständige Repräsentierbarkeit unscharfer Zustandsbeschreibungen führt aber dazu, daß einzelne Protokollverstöße seitens des Kommunikationspartners A theoretisch übersehen werden könnten, solange noch Zustände des Prüfautomaten F vorkommen, die Zustände des Protokollautomaten M repräsentieren. Nach dieser - bei dem erfindungsgemäßen Verfahren - sehr kurzen Synchronisationsphase wird jeder Protokollverstoß mit Sicherheit erkannt.

Anhand eines einfachen Beispiels soll das erfindungsgemäße Verfahren nachfolgend anschaulich erklärt werden. Dazu sind zunächst als Beispiel ein Kommunikationsprotokoll zu definieren und ein zugehöriger Kommunikationsablauf anzugeben.

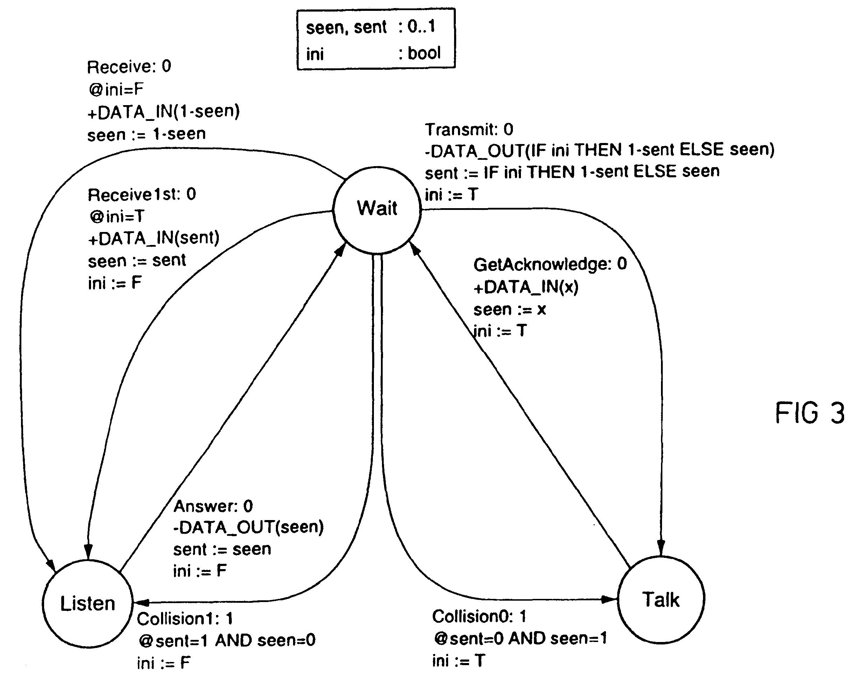

Das verwendete Beispiel ist nicht praxisrelevant. Es wird im folgenden als INI-Protokoll bezeichnet (für Initiative). Es handelt sich um ein symmetrisches Protokoll mit einem einzigen Nachrichtentyp pro Senderichtung (DATA_IN, DATA_OUT). Diese Nachrichten können sowohl aus eigener Initiative gesendet werden als auch die Bestätigung für eine zuvor empfangene Nachricht ausdrücken. Zur Unterscheidung dieser Bedeutungen enthält jede Nachricht den einzigen Parameter Flag, der nur die Werte 0 und 1 annehmen kann. Es wird eine sichere, zuverlässige und sequenzerhaltende Übertragungsstrecke vorausgesetzt. In Fig. 3 ist der Zustandsgraph des angenommenen INI-Protokollautomaten dargestellt. Neben den über die Knoten des Zustandsgraphen dargestellten Grundzuständen existieren die Zustandsvariablen seen, sent, ini. Die Transitionen sind mit Namen und ihren Prioritäten (0, 1) bezeichnet. Zustandsbedingungen, die zusätzlich zum entsprechenden Grundzustand gelten müssen, sind mit ,@' gekennzeichnet. ,+' bzw. ,-' leiten Spezifikationen von Ein- bzw. Ausgabenachrichten mit einer Vorschrift für den Flag -Parameter ein.

Die drei Grundzustände des INI-Protokollautomaten haben folgende Bedeutungen:

- Wait. Es stehen keine Bestätigungen aus. Jeder der Partner darf eine Nachrichtenübertragung initiieren.

- Talk. Diese Instanz hat eine Nachricht gesendet und wartet auf die Bestätigung.

- Listen. Diese Instanz hat eine auf Initiative des Partners gesendete Nachricht empfangen und muß noch bestätigen.

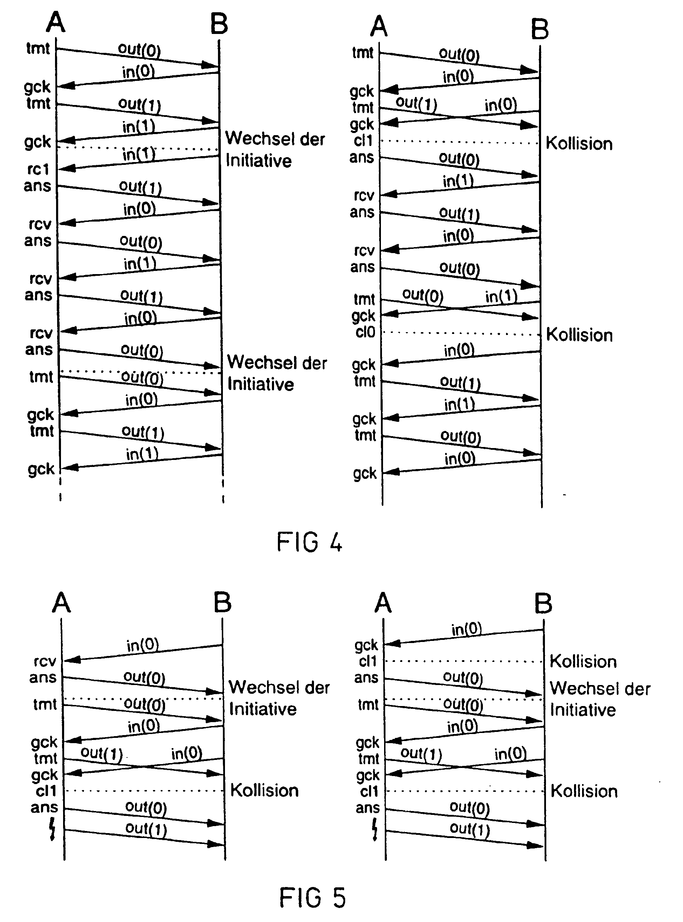

Fig.4 stellt einen korrekten Protokollablauf exemplarisch dar. Die vom Kommunikationspartner A in diesem Beispiel durchlaufenen Transitionen sind mit Kürzeln am linken Diagrammrand angegeben, die Nachrichten tragen die Typbezeichnung und den Wert des Flag-Parameters.

Das Ablaufbeispiel illustriert folgende Regeln:

- Im "normalen" Ablauf wird jede Nachricht durch eine Antwort mit demselben Flag-Parameter bestätigt, wobei sich Zyklen mit 0 und 1 als Parameter abwechseln.

- Beim Wechsel der Sendeinitiative verwendet der neue Initiator bzw. der andere Kommunikationspartner jedoch den Parameterwert des letzten Zyklus noch einmal, um seine Nachricht von der nächsten eventuell fälligen Bestätigung zu unterscheiden.

- Wenn eine Seite bzw. ein Kommunikationspartner einen Initiativewechsel versucht und sich ihre dies anzeigende Nachricht mit einer "regulären" Nachricht der Gegenseite bzw. des anderen Kommunikationspartners kreuzt, liegt eine Kollision vor. Diese wird aufgelöst, indem die Nachricht mit Flag = 0 normal bestätigt und die mit Flag = 1 verworfen wird, als wäre sie nicht gesendet worden.

Zur weiteren Demonstration dieses beispielhaften Verfahrens wird der in nachstehender Tabelle dargestellte Kommunikationsablauf zwischen den Kommunikationspartnerrn A und B verwendet.

| Eingabe | | Ausgabe | |
|---|---|---|---|
| Nr. | Nachricht | Nr. | Nachricht |
| 1 | DATA_IN(0) | | |
| | | 2 | DATA_OUT(0) |
| | | 3 | DATA_OUT(0) |
| 4 | DATA_IN(0) | | |
| | | 5 | DATA_OUT(0) |
| 6 | DATA_IN(0) | | |
| | | 7 | DATA_OUT(0) |
| | | 8 | DATA_OUT(1) |
| 9 | DATA_IN(1) | | |

Der initial vom Protokollmonitor PM anzunehmende - nachfolgend mit (1) bezeichnete - Zustand des Prüfautomaten F im Hinblick auf den Protokollautomaten M des Kommunikationspartners A gibt alle Grundzustände dieses Protokollautomaten und die vollständigen Wertebereiche für die Zustandsvariablen an:

$$
\begin{array}{l}
\{\texttt{Wait;Talk;Listen}\} \\[1ex]
\texttt{seen} \in \{0;1\} \\
\texttt{sent} \in \{0;1\} \\
\texttt{ini} \in \{T;F\}
\end{array}
\qquad (1)
$$

Hinsichtlich diese Zustandes ist nun zu prüfen, welche Transitionen spekulativ auf den Zustand (1) des Prüfautomaten anzuwenden sind. Die nächsten anstehenden Nachrichten sind die Nachrichten 1 (Eingabe) und 2 (Ausgabe). Da höher priorisierte Transitionen Vorrang vor niedriger priorisierten haben, werden die Transitionen mit der höchsten Priorität zuerst betrachtet. Dies sind Collision0 und Collision1.

Wenn Collision0 korrekt beim Kommunikationspartner A schaltet, dann muß sich A zuvor im Zustand Wait befinden, und die Zustandsbedingung sent=0∧seen=1 muß gelten (vgl.Fig.3). Entsprechend wird der Zustand (1) des Prüfautomaten F erst gemäß den Voraussetzungen für Collision0 eingeschränkt und anschließend die Zustandstransformation von Collision0 mit der Zuweisung ini=T auf diesen reduzierten potentiellen Ausgangszustand angewandt. Es ergeben sich zwei neue Zustände (2) und (3) des Prüfautomaten, wie die nachstehenden Darstellungen erkennen lassen.

$$
\boxed{\begin{array}{c} \{\texttt{Wait}\} \\ \hline \texttt{seen} \in \{1\} \\ \texttt{sent} \in \{0\} \\ \texttt{ini} \in \{T;F\} \end{array}}
\quad \xrightarrow{\text{Collision0}} \quad
\boxed{\begin{array}{c} \{\texttt{Talk}\} \\ \hline \texttt{seen} \in \{1\} \\ \texttt{sent} \in \{0\} \\ \texttt{ini} \in \{T\} \end{array}} \quad (\text{:}
$$

Analog wird für collision1 verfahren:

$$
\boxed{\begin{array}{c} \{\texttt{Wait}\} \\ \hline \texttt{seen} \in \{0\} \\ \texttt{sent} \in \{1\} \\ \texttt{ini} \in \{T;F\} \end{array}}
\quad \xrightarrow{\text{Collision1}} \quad
\boxed{\begin{array}{c} \{\texttt{Listen}\} \\ \hline \texttt{seen} \in \{0\} \\ \texttt{sent} \in \{1\} \\ \texttt{ini} \in \{F\} \end{array}}
$$

$$(3)$$

Da beide neuen Zustände (2) und (3) des Prüfautomaten F aber in bezug auf die verarbeiteten Nachrichten dem Zustand (1) entsprechen und echte Teilmengen der - vom Zustand (1) erfaßten - Zustände des Protokollautomaten M repräsentieren, werden sie verworfen. Alle korrekten Folge-Verhaltensweisen des Kommunikationspartners A gehen auch direkt vom Zustand (1) aus.

Wenn eine niedriger priorisierte Transition als Collision0 und Collision1 vom Zustand (1) aus korrekt schaltet, dann ist das nur möglich, sofern Collision0 und Collision1 im tatsächlichen Zustand des Protokollautomaten des Kommunikationpartners A nicht schaltfähig sind - dies folgt aus der Prioritätsregelung. Also kann der Zustand (1) als Ausgangszustand für die folgenden Betrachtungen prinzipiell um die Zustände des Protokollautomaten M mit Collision0 - oder Collision1 -Schaltfähigkeit reduziert werden. Die Reduktionsbedingung dafür lautet (mit St als Bezeichnung für den Grundzustand des Automaten):

$$(St \neq Wait \lor sent \neq 0 \lor seen \neq 1) \land (St \neq Wait \lor sent \neq 1 \lor seen$$

$$\neq 0).$$

In diesem Fall kann aufgrund der unvollständigen Repräsentierbarkeit keine Reduktion des Zustandes (1) durchgeführt werden, da kein Wert irgendeiner Zustandsvariablen durch die Bedingung völlig ausgeschlossen wird.

Es folgen die drei Eingabetransitionen. Unter Berücksichtigung der Nachricht DATA_IN (0) ergibt sich für Receive die Bedingung ini = F ∧ 1 - seen = 0, der spekulative Schaltvorgang lautet:

$$
\begin{array}{|c|} \hline \{\texttt{Wait}\} \\ \hline \\ \texttt{seen} \in \{1\} \\ \texttt{sent} \in \{0;1\} \\ \texttt{ini} \in \{F\} \\ \\ \hline \end{array}
\quad \xrightarrow[\;+\,\texttt{DATA\_IN(0)}\;]{\texttt{Receive}} \quad
\begin{array}{|c|} \hline \{\texttt{Listen}\} \\ \hline \\ \texttt{seen} \in \{0\} \\ \texttt{sent} \in \{0;1\} \\ \texttt{ini} \in \{F\} \\ \\ \hline \end{array}
$$

$$(4)$$

Für Receive1st erfolgt die Reduktion des Zustandes (1) dagegen gemäß ini = T $\wedge$ sent = 0:

$$
\begin{array}{|c|} \hline \{\texttt{Wait}\} \\ \hline \\ \texttt{seen} \in \{0;1\} \\ \texttt{sent} \in \{0\} \\ \texttt{ini} \in \{T\} \\ \\ \hline \end{array}
\quad \xrightarrow[\;+\,\texttt{DATA\_IN(0)}\;]{\texttt{Receive1st}} \quad
\begin{array}{|c|} \hline \{\texttt{Listen}\} \\ \hline \\ \texttt{seen} \in \{0\} \\ \texttt{sent} \in \{0\} \\ \texttt{ini} \in \{F\} \\ \\ \hline \end{array}
$$

$$(5)$$

Da die obigen neuen Zustände (4) und (5) des Prüfautomaten F dieselben Nachrichten verarbeitet haben und der Zustand (5) eine Teilmenge der Zustände des Protokollautomaten M des Zustandes (4) repräsentiert, wird der Zustand (5) sogleich wieder verworfen.

Ohne besondere Annahmen, abgesehen vom Grundzustand Talk , kann GetAcknowledge schalten:

$$
\begin{array}{|c|} \hline \{\texttt{Talk}\} \\ \hline \\ \texttt{seen} \in \{0;1\} \\ \texttt{sent} \in \{0;1\} \\ \texttt{ini} \in \{T;F\} \\ \\ \hline \end{array}
\quad \xrightarrow[\;+\,\texttt{DATA\_IN(0)}\;]{\texttt{GetAcknowledge}} \quad
\begin{array}{|c|} \hline \{\texttt{Wait}\} \\ \hline \\ \texttt{seen} \in \{0\} \\ \texttt{sent} \in \{0;1\} \\ \texttt{ini} \in \{T\} \\ \\ \hline \end{array}
$$

$$(6)$$

Nun ist eine sehr wichtige Besonderheit zu beachten: Im Nachrichtenstrom gemäß obiger Tabelle ist zwar als unmittelbar nächste Nachricht, hier Nachricht 1, eine Eingabe vermerkt. Trotzdem kann die nächste Ausgabenachricht, hier Nachricht 2, durchaus von einem Schaltvorgang erzeugt worden sein, bevor Nachricht 1 eintraf. Dies liegt einerseits an der Nachrichtenlaufzeit zwischen dem Kommunikationspartner A und dem Protokollmonitor PM, andererseits an möglichen Verzögerungen, die durch Nachrichtenpuffer und die Verarbeitung der Nachricht in tieferen Protokollschichten auf der Seite des Kommunikationspartners auftreten können. Folglich muß der Protokollmonitor PM die nächste Ausgabenachricht immer auch dann betrachten, wenn sie eine gewisse Zeitspanne nach einer anstehenden Eingabenachricht in der beobachteten Kommunikation auftritt. Die konkrete Vorausschauzeit ist im Einzelfall protokoll- und architekturabhängig festzulegen.

Daher werden nun die beiden Ausgabetransitionen in bezug auf Nachricht 2, DATA_OUT(0), untersucht. Für Transmit ergibt sich als Bedingung (ini = T$\wedge$1 - sent = 0)$\vee$(ini = F$\wedge$1 seen = 0) was aufgrund der Unbestimmtheit von ini im Zustand (1) jedoch keine Reduktion erlaubt:

$$
\boxed{\begin{array}{c} \{\texttt{Wait}\} \\ \hline \texttt{seen} \in \{0;1\} \\ \texttt{sent} \in \{0;1\} \\ \texttt{ini} \in \{T;F\} \end{array}} \xrightarrow[\;-\,\texttt{DATA\_OUT(0)}\;]{\texttt{Transmit}} \boxed{\begin{array}{c} \{\texttt{Talk}\} \\ \hline \texttt{seen} \in \{0;1\} \\ \texttt{sent} \in \{0\} \\ \texttt{ini} \in \{T\} \end{array}}
$$

$$(7)$$

Answer erfordert seen=0 , liefert also eine Einschränkung:

$$
\boxed{\begin{array}{c} \{\texttt{Listen}\} \\ \hline \texttt{seen} \in \{1\} \\ \texttt{sent} \in \{0;1\} \\ \texttt{ini} \in \{T;F\} \end{array}} \xrightarrow[\;-\,\texttt{DATA\_OUT(0)}\;]{\texttt{Answer}} \boxed{\begin{array}{c} \{\texttt{Wait}\} \\ \hline \texttt{seen} \in \{0\} \\ \texttt{sent} \in \{0\} \\ \texttt{ini} \in \{F\} \end{array}}
$$

$$(8)$$

Damit sind alle Möglichkeiten für den Zustand (1) des Prüfautomaten F behandelt. Alle Transitionen waren schaltfähig, was angesichts der Tatsache, daß über den tatsächlichen Ausgangszustand keine Information vorlag, nicht überraschen kann. Die weiterhin zu betrachtenden Zustände des Prüfautomaten F sind(4), (6), (7), (8) .

Für Zustand (4) ist Nachricht 1 erledigt, und es steht nur die Ausgabenachricht 2, DATA_OUT (0), zur Verarbeitung an; denn nach ihr aufgezeichnete Eingabenachrichten können den Kommunikationspartner A nicht früher erreicht haben als den Protokollmonitor PM. Aus dem Grundzustand Listen kann nur die Transition Answer schalten, mit der Reduktionsbedingung seen=0, die für alle Zustände des Protokollautomaten M bezüglich des Zustandes (4) erfüllt ist:

$$
\boxed{\begin{array}{c} \{\texttt{Listen}\} \\ \hline \texttt{seen} \in \{0\} \\ \texttt{sent} \in \{0;1\} \\ \texttt{ini} \in \{F\} \end{array}} \xrightarrow[\;-\,\texttt{DATA\_OUT(0)}\;]{\texttt{Answer}} \boxed{\begin{array}{c} \{\texttt{Wait}\} \\ \hline \texttt{seen} \in \{0\} \\ \texttt{sent} \in \{0\} \\ \texttt{ini} \in \{F\} \end{array}}
$$

$$(9)$$

Dieser neue Zustand (9) des Prüfautomaten F ist der einzige Folge-Zustand des Zustandes (4) und ersetzt diesen in der Zustandsliste (6), (7), (8) und (9).

Zustand (6) hat ebenfalls die 1.Nachricht empfangen und muß als nächstes die Ausgabenachrich 2 verarbeiten. Vom Grundzustand Wait gibt es fünf Transitionen. Wieder gilt: Behandlung mit absteigender Priorität.

Collision0 kommt wegen der Bedingung seen=1 auf keinen Fall in Frage. Collision1 erfordert sent= $1 \wedge$ seen $= 0$ , was eine erfolgreiche Reduktion des Zustandes (6) liefert:

$$\boxed{\begin{array}{c} \{\text{Wait}\} \\ \hline \text{seen} \in \{0\} \\ \text{sent} \in \{1\} \\ \text{ini} \in \{T\} \end{array}} \quad \xrightarrow{\text{Collision1}} \quad \boxed{\begin{array}{c} \{\text{Listen}\} \\ \hline \text{seen} \in \{0\} \\ \text{sent} \in \{1\} \\ \text{ini} \in \{F\} \end{array}}$$

Der neue Zustand (10) repräsentiert aber eine Teilmenge zu Zustand (4) bei gleichem Kommunikationsfortschritt und wird daher verworfen. Für die restlichen, niedriger priorisierten Transitionen wird der Zustand (6) auf die Zustände des Protokollautomaten M reduziert, in denen Collision1 nicht schalten muß. Die Reduktionsbedingung lautet sent $\neq 1$ V seen $\neq 0$, was wegen der Unerfüllbarkeit des zweiten Terms tatsächlich eine Einschränkung des Zustandes (6) ergibt:

$$\boxed{\begin{array}{c} \{\text{Wait}\} \\ \hline \text{seen} \in \{0\} \\ \text{sent} \in \{0\} \\ \text{ini} \in \{T\} \end{array}}$$

$$(11)$$

Als einzige Transition ohne Eingabenachricht bleibt Transmit. Ihre von DATA_OUT (0) bedingte Forderung 1 - sent = 0 erfüllt dieser neue Zustand (11) aber nicht.

Jetzt sind noch die Zustände (7), (8) und (9) übrig.

Für den Zustand (7) ist bisher nur die 2.Nachricht verwendet worden, als nächste stehen prinzipiell die Nachrichten 1 und 3, DATA_IN(0) bzw. DATA_OUT(0), an. Hier soll angenommen werden, daß Nachricht 3 so spät aufgezeichnet wurde, daß sie nicht vor dem Eintreffen von Nachricht 1 entstanden sein kann. Es ist also nur Nachricht 1 zu betrachten.

Einzige Transition von Talk aus ist GetAcknowledge, die keine Bedingungen stellt:

$$\boxed{\begin{array}{c} \{\text{Talk}\} \\ \hline \text{seen} \in \{0;1\} \\ \text{sent} \in \{0\} \\ \text{ini} \in \{T\} \end{array}} \quad \xrightarrow[\text{+ DATA\_IN(0)}]{\text{GetAcknowledge}} \quad \boxed{\begin{array}{c} \{\text{Wait}\} \\ \hline \text{seen} \in \{0\} \\ \text{sent} \in \{0\} \\ \text{ini} \in \{T\} \end{array}}$$

$$(12)$$

Mit diesem neuen Zustand (12) resultiert die Zustandsliste ist (8), (9) und (12). Erstmalig treten hier nur noch scharfe Zustandsbeschreibungen auf, d. h. nur ein Zustand des Protollautomaten M pro Zustand des Prüfautomaten F. Daher wird ab jetzt jeder Verhaltensfehler des Kommunikationspartners A mit Sicherheit erkannt. Aus demselben Grund gibt es jetzt keine eigentlichen Einschränkungen von Zustandsbeschreibungen mehr, sondern nur noch erfüllte oder nicht erfüllte Bedingungen.

Im Zustand (8) liegt der gleiche Kommunikationsfortschritt vor wie Zustand (7), es steht also nur Nachricht 1 an, ein DATA_IN(0).

Weil hier seen=sent=0 gilt, sind Collision0 und Collision1 nicht schaltfähig. ReceiveIst erfordert ini=T und entfällt ebenfalls. Receive scheitert am vorliegenden Flag -Parameter, der zur Bedingung 1-seen = 0 führt. Die restlichen Transitionen erzeugen Ausgaben, die - nach Voraussetzung über die Vorausschau-Reichweite - mit dem Nachrichtenstrom inkonsistent sind.

Somit kommen nur noch die Zustände (9) und (12) vor.

Für Zustand (9) ist nur Ausgabenachricht 3 zu betrachten, die Nachrichten 1 und 2 sind bereits verarbeitet. Der Ausgangs-Grundzustand ist Wait . Wegen der Gleichheit von seen und sent bleibt nur die Transition Transmit mit der - erfüllten - Bedingung seen=0 :

$$
\boxed{
\begin{array}{c}
\{\texttt{Wait}\} \\
\hline
\texttt{seen} \in \{0\} \\
\texttt{sent} \in \{0\} \\
\texttt{ini} \in \{F\}
\end{array}
}
\quad
\xrightarrow[- \texttt{DATA\_OUT(0)}]{\texttt{Transmit}}
\quad
\boxed{
\begin{array}{c}
\{\texttt{Talk}\} \\
\hline
\texttt{seen} \in \{0\} \\
\texttt{sent} \in \{0\} \\
\texttt{ini} \in \{T\}
\end{array}
}
$$

$$(13)$$

Die neue Zustandsliste umfaßt die Zustände (12) und(13) des Prüfautomaten F.

Der Kommunikationsfortschritt zum Zustand (12) entspricht dem bezüglich des Zustandes (9); nach Berücksichtigung der Nachrichten 1 und 2 steht nur ein DATA_OUT (0) an.

Die Kollisionstransitionen entfallen zustandsbedingt und die Eingabetransitionen wegen des Kommunikationsfortschritts Transmit fordert 1-sent = 0 nicht erfüllt.

Damit steht der scharfe Zustand (13) als einzige noch in Betracht kommende Zustandsbeschreibung für den Kommunikationspartner fest. Der Protokollmonitor PM ist nun vollständig synchronisiert.

Im Zustand (13) des Prüfautomaten F sind die Nachrichten 1 bis 3 verarbeitet, es stehen die Nachrichten DATA_IN(0) (Nr.4) und DATA_OUT(1) (Nr.5) zur Behandlung an. Von Talk kann nur GetAcknowledge schalten, wobei keine weitere Bedingung zu erfüllen ist:

$$
\boxed{
\begin{array}{c}
\{\texttt{Talk}\} \\
\hline
\texttt{seen} \in \{0\} \\
\texttt{sent} \in \{0\} \\
\texttt{ini} \in \{T\}
\end{array}
}
\quad
\xrightarrow[+ \texttt{DATA\_IN(0)}]{\texttt{GetAcknowledge}}
\quad
\boxed{
\begin{array}{c}
\{\texttt{Wait}\} \\
\hline
\texttt{seen} \in \{0\} \\
\texttt{sent} \in \{0\} \\
\texttt{ini} \in \{T\}
\end{array}
}
$$

$$(14)$$

Nun sind Nachricht 1 bis Nachricht 4 erledigt, die nächste Transition betrachtet nur Nachricht 5, DATA_OUT (0), weil es eine Ausgabe ist. Daher bleibt im Grundzustand Wait wieder nur Transmit übrig, diesmal lautet die Bedingung 1-sent = 1 und ist erfüllt:

$$
\boxed{
\begin{array}{c}
\{\texttt{Wait}\} \\
\hline
\texttt{seen} \in \{0\} \\
\texttt{sent} \in \{0\} \\
\texttt{ini} \in \{T\}
\end{array}
}
\quad
\xrightarrow[- \texttt{DATA\_OUT(1)}]{\texttt{Transmit}}
\quad
\boxed{
\begin{array}{c}
\{\texttt{Talk}\} \\
\hline
\texttt{seen} \in \{0\} \\
\texttt{sent} \in \{1\} \\
\texttt{ini} \in \{T\}
\end{array}
}
$$

Jetzt kommen wieder zwei Nachrichten in Frage, nämlich DATA_IN(0) als die 6. und DATA_OUT(0) als die 7.,

um eine Transition mit Talk als Ausgangspunkt zu ermitteln. Wie schon beim Zustand (13) schaltet GetAcknowledge :

```
┌─────────────────┐                          ┌─────────────────┐
│     {Talk}      │                          │     {Wait}      │
├─────────────────┤      GetAcknowledge      ├─────────────────┤
│ seen ∈  {0}     │   ───────────────────▶   │ seen ∈  {0}     │
│ sent ∈  {1}     │      + DATA_IN(0)        │ sent ∈  {1}     │
│  ini ∈  {T}     │                          │  ini ∈  {T}     │
└─────────────────┘                          └─────────────────┘
```

$$(16)$$

Als nächste Nachricht kommt nur Ausgabe 7 in Betracht, sie lautet DATA_OUT (0). Vorerst ist aber sent= $1 \wedge$ seen = 0 erfüllt, was von Wait aus aufgrund der Prioritätsregeln das sofortige Schalten von Collision1 erzwingt:

```
┌─────────────────┐                          ┌─────────────────┐
│     {Wait}      │                          │    {Listen}     │
├─────────────────┤       Collision1         ├─────────────────┤
│ seen ∈  {0}     │   ───────────────────▶   │ seen ∈  {0}     │
│ sent ∈  {1}     │                          │ sent ∈  {1}     │
│  ini ∈  {T}     │                          │  ini ∈  {F}     │
└─────────────────┘                          └─────────────────┘
```

Listen kann nur via Answer verlassen werden. Dank DATA_OUT(0) resultiert dafür die Bedingung seen=0, die der Zustand (17) auch erfüllt:

```
┌─────────────────┐                          ┌─────────────────┐
│    {Listen}     │                          │     {Wait}      │
├─────────────────┤        Receive           ├─────────────────┤
│ seen ∈  {0}     │   ───────────────────▶   │ seen ∈  {0}     │
│ sent ∈  {1}     │      + DATA_IN(0)        │ sent ∈  {0}     │
│  ini ∈  {F}     │                          │  ini ∈  {F}     │
└─────────────────┘                          └─────────────────┘
```

Die nächste, 8.Nachricht ist mit DATA_OUT(1) auch eine Ausgabe und daher wiederum allein zu betrachten. Die Kollisionsbedingungen sind diesmal nicht erfüllt, also muß Transmit schalten. Wegen ini = F liefert die Ausgaberegel von Transmit aber seen = 1 und damit einen Widerspruch zum letzten vorhandenen Zustand (18).

Das INI-Protokoll vermag die beobachtete Kommunikation an dieser Stelle nicht mehr zu erklären, es wurde ein Protokollverstoß des Kommunikationspartners A erkannt. Tatsächlich hätte A einen Wechsel der Initiative ja mit dem Flag -Wert des letzten Zyklus, also 0, anzeigen müssen.

Es würde jetzt eine Neusynchronisation beginnen, weil keinerlei Information mehr über den tatsächlichen Zustand des Protokollautomaten M des kommunikationspartners A vorhanden ist. Dazu nimmt der Protollmonitor PM wieder den initialen Zustand (1) an, wobei bereits die den Fehler auslösende Nachricht 8 als Wiederaufsetzpunkt innerhalb der Kommunikation herangezogen werden kann. Der beispielhafte Meßvorgang soll an dieser Stelle enden.

Als Ergebnis der Beispielmessung läßt sich der tatsächliche Kommunikationsablauf nun problemlos rekonstruieren. Aufgrund der Zusammenfassung zweier Zustände (10) und (11) gemäß den obigen Darlegungen ist das Resultat am Beginn der Kommunikation nicht eindeutig. Figur 5 stellt beide gleichermaßen möglichen Varianten bis zum Fehlerzeitpunkt dar.

Das verwendete Beispielprotokoll ist in extremer Weise darauf ausgerichtet, daß sich die Bedeutung einzelner Nachrichten erst aus dem Kontext erschließt. In dieser Hinsicht stellt es sogar höhere Ansprüche an den Protokollmonitor PM, als das bei den meisten realen Kommunikationsprotokollen der Fall ist. Trotzdem war die Synchronisationsphase nach nur drei Nachrichten abgeschlossen.

Ergänzend ist darauf hinzuweisen, daß zahlreiche Protokolle insbesondere der OSI-Schicht 3 den Dienst erbringen, mehrere virtuelle Verbindungen über dasselbe Kommunikationsmedium abzuwickeln. In solchen Fällen werden die verbindungsspezifischen Protokollprozeduren typischerweise durch einen separaten Protokollautomaten pro Verbindung modelliert. Dazu kommt meist mindestens ein zusätzlicher Automat, der koordinierende Aufgaben übernimmt, z. B. den Abbau aller bestehenden Verbindungen oder die Aktivierung weiterer Automaten für neu aufgebaute Verbindungen. Der Gesamtzustand einer Instanz wird dann durch die Zustände aller aktiven Protokollautomaten gebildet.

Wenn es n aktive Protokollautomaten pro Kommunikationspartner gibt, zu denen der Protokollmonitor jeweils m einzelne Zustände seines Prüfautomaten betrachtet, so ist dies gleichbedeutend mit $m^n$ Varianten für den Gesamtzustand der Instanz. Diese Potenzierung der Zustandsvarianten sprengt sehr schnell die Grenzen des akzeptablen Rechenaufwands, sofern alle Gesamtzustände betrachtet werden müssen. Um dennoch in solchen Fällen zu akzeptablen Lösungen zu gelangen, wird gefordert, daß stets alle Kombinationen der zu allen aktiven Protokollautomaten existierenden Zustände des Prüfautomaten als Beschreibungen in Betracht zu ziehender Gesamtzustände der Instanz gelten; alle Abhängigkeiten zwischen verschiedenen Protokollautomaten werden dabei unterdrückt. Jeder Prüfautomat überwacht genau den Teil der Kommunikation, der vom jeweils zugeordneten Automaten des Kommunikationsprotokolls abgewickelt wird. Dadurch bildet jeder mögliche Zustand eines Protokollautomaten mit jedem möglichen Zustand eines weiteren Protokollautomaten eine in Betracht kommende Zustandskombination. Dann kann das Meßverfahren unabhängig auf die einzelnen automatenspezifischen Zustände des Prüfautomaten angewandt werden, von denen es in obiger Notation lediglich m n gibt.

In der Tat arbeiten derartige Protokollautomaten in realen Protokollen weitgehend unabhängig. Abhängigkeiten können jedoch bei Verwaltungsaufgaben wie z. B. einem gruppenweisen Verbindungsabbau auftreten. Wegen der obigen Forderung muß der erfindungsgemäße Protokollmonitor in solchen Sonderfällen zu viele Gesamtzustände zulassen, da die Spekulation auf einen tatsächlichen Zustand für einen Protokollautomaten die Annahmen für alle anderen Automaten nicht beeinflussen kann. Daß dadurch Fehler übersehen werden,ist allerdings praktisch unwahrscheinlich bzw.aus Aufwandsgründen hinzunehmen.

Ergänzend ist ferner anzumerken, daß im obigen Beispiel keine Zeitbedingungen für das Antwortverhalten des Kommunikationspartners A definiert wurden. Solche Zeitbedingungen können jedoch innerhalb der beschriebenen Methodik in das Verfahren aufgenommen werden. Zeitgeber werden als unscharfe Zustandsvariablen modelliert, die innerhalb der Zustandsbedingungen den möglichen oder nötigen Zeitbereich für nachfolgende Schaltvorgänge angeben. Das "Starten" eines Zeitgebers erfolgt durch Zuweisung an die entsprechende Zeitgebervariable im Rahmen der Zustandstransformation einer Transition.

**Patentansprüche**

1.  Verfahren zum Überprüfen eines zwischen Kommunikationspartnern (A,B) über ein Kommunikationsmedium (KM) gemäß einem Kommunikationsprotokoll ausgeführten Datenaustausches, bei dem

    - das Kommunikationsprotokoll durch einen Protokollautomaten gemäß dem Konzept eines erweiterten endlichen Automaten definiert ist, welcher das korrekte Kommunikationsverhalten eines Kommunikationspartners (z.B.A) beschreibt,
    - der Datentausch mittels eines mit dem Kommunikationsmedium (KM) gekoppelten Protokollmonitors (PM) erfaßt wird, der einen Prüfautomaten enthält, welcher ebenfalls nach dem Konzept eines erweiterten endlichen Automaten definiert ist,
    - der Prüfautomat die gleichen Zustandsvariablen wie der das Kommunikationsprotokoll definierende Protokollautomat mit der Abweichung enthält, daß jede Zustandsvariable des Prüfautomaten mit einem Element der Potenzmenge des Wertebereichs der entsprechenden Zustandsvariablen des Protokollautomaten belegt ist, so daß jede Belegung der Zustandsvariablen des Prüfautomaten eine Menge in Betracht zu ziehender Zustände für den Protokollautomaten repräsentiert,
    - ausgehend von einem Zustand des Prüfautomaten, der alle Werte der Zustandsvariablen des Protokollautomaten umfaßt, nacheinander auf jeden der vorhandenen Zustände des Prüfautomaten spekulativ alle für mindestens einen der durch den jeweiligen Zustand des Prüfautomaten beschriebenen Zustände des Protokollautomaten erlaubten Zustandsübergänge des Protokollautomaten angewandt werden, die außerdem mit den im erfaßten Datenaustausch vorkommenden Nachrichten verträglich sind, wobei

        a) der jeweilige Zustand des Prüfautomaten zunächst gemäß der logischen Schaltbedingung des anzuwendenden Zustandsüberganges und der zugehörigen Nachricht innerhalb des erfaßten Datenaustauschs präzisiert wird,

b) anschließend gemäß des Zustandüberganges des Protokollautomaten ein einzelner Folgezustand des Prüfautomaten gebildet wird, der alle durch besagten Zustandsübergang möglicherweise entstehenden Zustände des Protokollautomaten beschreibt,

c) nach Anwendung aller erlaubten Zustandsübergänge der jeweilige Zustand nach obigem Merkmal a) des Prüfautomaten durch alle aus diesem Zustand des Prüfautomaten gemäß obigem Merkmal b) gebildeten Folgezustände ersetzt wird,

- ein Protokollverstoß dann gemeldet wird, wenn nach einem Verarbeitungsschritt gemäß obigem Merkmal c) die Zustände des Prüfautomaten ausgeschöpft sind.

2. Verfahren nach Anspruch 1, das nach dem Konzept mehrerer zusammenwirkender erweiterter endlicher Automaten definiert ist, bei der

- der Protokollmonitor Prüfautomaten in einer der Anzahl der das Kommunikationsprotokoll definierenden erweiterten endlichen Automaten enthält und
- jeder Prüfautomat durch Zustandsvariable entsprechend dem jeweils zugeordneten Automaten des Kommunikationsprotokolls definiert ist.

3. Verfahren nach Anspruch 2 mit mehreren virtuellen verbindungen über das Kommunikationsmedium, von denen jede durch einen separaten Protokollautomaten modelliert ist,
**dadurch gekennzeichnet,**

- **daß** jeder Prüfautomat genau den Teil der Kommunikation überwacht, der vom jeweils zugeordneten Automaten des Kommunikationsprotokolls abgewickelt wird.

**Claims**

1. A method for checking a data exchange between communication participants (A, B) established on a communication medium (CM) in compliance with a communication protocol wherein

- the communication protocol is defined by a protocol automaton based on an extended finite state automaton principle, said automaton describing the correct communication behaviour of a communication participant (e.g. A),
- the data exchange is captured by means of a protocol monitor (PM) connected to the communication medium (CM), said monitor including a test automaton which is likewise defined according to the extended finite state automaton principle,
- the test automaton contains the same state variables as the protocol automaton defining the communication protocol, with an exception that each state variable of the test automaton is allocated one element of the power set of the value range of the corresponding state variable of the protocol automaton so that each allocation of the state variable of the test automaton represents a set of states for the protocol automaton which are to be considered,
- based on one state of the test automaton which comprises all the values of the state variables of the protocol automaton, all state transitions of the protocol automaton which are permissible for at least one of the states of the protocol automaton described by the respective state of the test automaton are consecutively speculatively applied to each of the existing states of the test automaton, which state transitions are furthermore compatible with the messages occurring in the captured data exchange, wherein

a) the respective state of the test automaton is first of all stated more precisely according to the logical switching condition of the state transition to be applied and an associated message in the captured data exchange,

b) subsequently, in accordance with the state transition of the protocol automaton, a single sequential state of the test automaton is formed describing all the states of the protocol automaton which may be generated as a result of said state transition,

c) after the application of all permissible state transitions, the respective state according to above feature a) of the test automaton is replaced with all sequential states generated from this state of the test automaton according to above feature b),

- a violation of the protocol is reported if after a processing step according to above feature c) the states of the test automaton have all been examined without success.

**2.** A method according to claim 1 defined on the basis of the principle of a plurality of cooperating extended finite state automatons, in which

- the protocol monitor contains test automatons in a number corresponding to the number of extended finite state automatons defining the communication protocol, and
- each test automaton is defined by state variables in accordance with the respective allocated automaton of the communication protocol.

**3.** A method according to claim 2 with a plurality of virtual connections via the communication medium, each of which is modelled by a separate protocol automaton,
**characterized in that**

- each test automaton monitors the very part of the communication which is dealt with by the respective allocated automaton of the communication protocol.

**Revendications**

**1.** Procédé de contrôle d'un échange de données effectué entre des partenaires de communication (A,B) par l'intermédiaire d'un moyen de communication (KM) selon un protocole de communication dans lequel

- le protocole de communication est défini par un automate de protocole selon le concept d'un automate fini élargi qui décrit le comportement de communication correct d'un partenaire de communication (par exemple A),
- l'échange de données est saisi au moyen d'un dispositif de surveillance du protocole (PM) raccordé au moyen de communication (KM), qui comporte un automate de contrôle qui est également défini d'après le concept d'un automate fini élargi,
- l'automate de contrôle contient les mêmes variables d'état que l'automate de protocole définissant le protocole de communication à la différence que chaque variable d'état de l'automate de contrôle est occupée par un élément de l'ensemble des sous-ensembles de la plage de valeurs des variables d'état correspondantes de l'automate de protocole, de sorte que chaque occupation des variables d'état de l'automate de contrôle représente un ensemble d'états à prendre en considération pour l'automate de protocole,
- partant d'un état de l'automate de contrôle qui comprend toutes les valeurs des variables d'état de l'automate de protocole, toutes les transitions d'états autorisés de l'automate de protocole sont successivement appliquées à chacun des états présents de l'automate de contrôle, de manière spéculative, pour au moins un des états décrits de l'automate de protocole par l'état de l'automate de contrôle, qui en plus sont compatibles avec les messages apparaissant dans l'échange de données saisi,

a) l'état de l'automate de contrôle étant d'abord précisé selon la fonction logique de la transition d'état à appliquer et du message associé à l'intérieur de l'échange de données saisi,
b) ensuite, selon la transition d'état de l'automate de protocole, un état successif individuel de l'automate de contrôle est formé, qui décrit tous les états de l'automate de protocole se produisant le cas échéant par ladite transition d'état,
c) après application de toutes les transitions d'état autorisées, l'état d'après la caractéristique ci-dessus a) de l'automate de contrôle est remplacé par tous les états successifs formés à partir dudit état de l'automate de contrôle d'après la caractéristique b) ci-dessus,

- une infraction au protocole est signalée lorsque d'après l'étape de traitement d'après la caractéristique c) cidessus, les états de l'automate de contrôle sont épuisés.

**2.** Procédé de contrôle selon la revendication 1, qui est défini d'après le concept de plusieurs automates finis élargis coopérants dans lequel

- le dispositif de surveillance du protocole contient des automates de contrôle en un nombre correspondant aux automates finis élargis définissant le protocole de communication et
- chaque automate de contrôle est défini par des variables d'état correspondant à l'automate associé du protocole de communication.

3. Procédé de contrôle selon la revendication 2, comportant plusieurs liaisons virtuelles par le biais du moyen de communication, dont chacune est modélisée par un automate de protocole séparé **caractérisé en ce que**

- chaque automate de contrôle surveille précisément la partie de communication qui est traitée par l'automate associé du protocole de communication.

FIG 1

FIG 2

EP 0 862 827 B1

```
seen, sent  : 0..1
ini         : bool
```

Receive: 0
@ini=F
+DATA_IN(1-seen)
seen := 1-seen

Transmit: 0
-DATA_OUT(IF ini THEN 1-sent ELSE seen)
sent := IF ini THEN 1-sent ELSE seen
ini := T

Receive1st: 0
@ini=T
+DATA_IN(sent)
seen := sent
ini := F

**Wait**

GetAcknowledge: 0
+DATA_IN(x)
seen := x
ini := T

Answer: 0
-DATA_OUT(seen)
sent := seen
ini := F

**Listen**

**Talk**

Collision1: 1
@sent=1 AND seen=0
ini := F

Collision0: 1
@sent=0 AND seen=1
ini := T

FIG 3

FIG 4

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **HIRONORI SAITO et al.** An Acyclic Expansion-Based Protocol Verification for Communications Software. *IEICE Transactions on Communications,* Oktober 1992, 998-1007